(19) Europäisches Patentamt
European Patent Office
Office européen des brevets

(11) **EP 2 786 909 A1**

(12) **EUROPEAN PATENT APPLICATION**
published in accordance with Art. 153(4) EPC

(43) Date of publication:
**08.10.2014 Bulletin 2014/41**

(51) Int Cl.:
**B60W 10/06** (2006.01)     **B60K 6/445** (2007.10)
**B60W 10/08** (2006.01)     **B60W 20/00** (2006.01)

(21) Application number: **11876568.4**

(22) Date of filing: **02.12.2011**

(86) International application number:
**PCT/JP2011/077947**

(87) International publication number:
**WO 2013/080376 (06.06.2013 Gazette 2013/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventor: **ANDO Daigo**
**Toyota-shi**
**Aichi 471-8571 (JP)**

(74) Representative: **TBK**
**Bavariaring 4-6**
**80336 München (DE)**

(54) **HYBRID VEHICLE**

(57)     A hybrid vehicle 10 according to one of embodiments of the present invention applies, to a drive axel 53, a torque equal to a user requesting torque determined based on an accelerator operation amount AP, by controlling a torque generated by an engine 20 and a torque generated by an electric motor while adjusting a power generated by the engine in such a manner that an engine efficiency becomes optimum (i.e., while operating the engine 20 at an optimum engine operation point). Further, the vehicle 10 controls an electric power generated by a first motor generator MG1 by varying the power generated by the engine based on a remaining capacity SOC of the battery 63 so as to charge the battery 63. In addition, the vehicle controls the air-fuel of the engine to a rich air-fuel ratio when a predetermined condition is not satisfied, and to a stoichiometric air-fuel ratio when the predetermined condition is satisfied. When the air-fuel ratio of the engine is controlled to be the rich air-fuel ratio, the vehicle 10 sets an upper limit (engine output power upper limit) of the power generated by the engine 20 to a value smaller than a value when the air-fuel ratio of the engine is controlled to be the stoichiometric air-fuel ratio.

FIG.2

**Description**

TECHNICAL FIELD

The present invention relates to a hybrid vehicle which runs while controlling an internal combustion engine and an electric motor.

BACKGROUND ART

A hybrid vehicle mounts, as a driving source for generating a driving force/power to run the vehicle, an internal combustion engine and an electric motor. That is, the hybrid vehicle runs by transmitting a torque generated by at least one of the internal combustion engine and the electric motor to a drive axle connected to drive wheels of the vehicle. Hereinafter, the internal combustion engine is also simply referred to as an "engine."

Such a hybrid vehicle determines a torque (i.e., user requesting torque) requested to be generated at a drive axle of the hybrid vehicle based on an accelerator operation amount of a user, and determines a user requesting power based on a product of the user requesting torque and a rotational speed of the drive axle (i.e., vehicle speed relating value). Thereafter, the hybrid vehicle adopts a power equal to the user requesting power as an engine requested power, and make the engine generate that power. At this point in time, an engine generating torque Te and an engine rotational speed Ne are determined in such a manner that a state in which the engine is operated most efficiently is achieved. That is, the hybrid vehicle makes the engine output/generate the power equal to the engine requested power, while the vehicle adjusts an engine operating state (the engine generating torque Te and the engine rotational speed Ne) in such a manner that the engine operating state becomes the state in which the engine is operated most efficiently. Further, the electric motor is driven in such a manner that a shortage of a torque with respect to the user requesting torque when a torque according to the engine requested torque Te is applied to the drive axle is compensated by the torque generated by the electric motor.

In addition, the hybrid vehicle comprises an electricity storage device (e.g., battery) for supplying an electric power to the electric motor, and a generator for generating an electric power for charging the electricity storage device. When it is determined that, based on a parameter (hereinafter, referred to as a "remaining capacity parameter") correlated with a remaining capacity of the electricity storage device, the electricity storage device is to be charged, the hybrid vehicle obtains a value by adding a power (battery charging requested power) necessary to generate the electric power for charging to the above described user requesting power, and sets the obtained power as the engine requested power.

In this case as well, the hybrid vehicle makes the engine output/generate the power equal to the engine requested power, while the vehicle adjusts the engine operating state (the engine generating torque Te and the engine rotational speed Ne) in such a manner that the engine operating state becomes the state in which the engine is operated most efficiently. Further, the vehicle drives the electric motor in such a manner that the shortage of the torque with respect to the user requesting torque when the torque according to the engine requested torque Te is applied to the drive axle is compensated by the torque generated by the electric motor (e.g., refer to Patent Literature 1).

[Citation List]

[Patent Literature]

[Patent Literature 1] Japanese Patent Application Laid-Open (*kokai*) No. Hei 9-308012 (refer to paragraphs 0111, 0141 to 0145, FIGs. 7, 9, and 16)

SUMMARY OF THE INVENTION

Meanwhile, the engine mounted on the hybrid vehicle is configured in such a manner that an air-fuel ratio of a mixture supplied to the engine (hereinafter, also referred to as an "air-fuel ratio of the engine") is adjusted based on a parameter (hereinafter, also referred to as an "engine parameter") indicative of an engine operating state, similarly to an engine of a typical vehicle which mounts that engine only as the driving source.

For example, the air-fuel ratio of the engine is set to/at an air-fuel ratio (hereinafter, also referred to as a "rich air-fuel ratio") smaller than a stoichiometric air-fuel ratio in order for the engine to be stably operated, immediately after the engine is started and/or when a temperature of a coolant water of the engine is low. Also, in a case in which the engine comprises an air-fuel ratio sensor in an exhaust passage of the engine, the air-fuel ratio of the engine is set to/at the rich air-fuel ratio until the air-fuel ratio sensor becomes activated.

However, having the engine generate a large power in a state in which the air-fuel ratio of the engine is set at the rich air-fuel ratio may worsen/deteriorate a fuel efficiency. Especially, the fuel efficiency may further be degraded, when the engine requested power becomes large by adding the above described battery charging requested power to the user requesting power. This is because the hybrid vehicle makes the engine generate the large power in the state in which the fuel efficiency of the engine is not high, and consumes the power generated by the engine for charging the electricity storage device.

The present inventor has found that it is advantageous from a viewpoint of the fuel efficiency in such a case to preferentially increase the generated torque by the electric motor so as to satisfy the user requesting torque, compared to the generated torque by the engine, within a range where it is not inevitable that the electricity storage device is charged, and to charge the electricity storage device by the power generated by the engine after the air-fuel ratio of the engine is set to/at the stoichiometric air-fuel ratio. That is, one of objects of the present invention is to improve the fuel efficiency of the hybrid vehicle by suppressing a charge amount for the electricity storage device in a state in which an efficiency of the engine is not high.

In order to achieve the above object, the hybrid vehicle according to the present invention comprises: an internal combustion engine; an electric motor; an electricity storage device capable of supplying an electric power for driving the electric motor to the electric motor; a generator capable of generating an electric power to charge the electricity storage device using a driving force of the engine; a power transmission mechanism configured to torque-transmittably connect a drive axle of the vehicle and the engine and to torque-transmittably connect the drive axle and the electric motor; and a control unit.

The control unit applies a torque equal to a user requesting torque which is a "torque requested to be generated at the drive axle, the torque being determined based on an accelerator operation amount of a user" to the drive axel, by controlling an engine generating torque and an electric motor output torque while adjusting an engine generating power (power generated by the engine) in such a manner that the engine efficiency becomes the highest/optimum. Further, the control unit control controls an electric power generated by the generator by varying the engine generating power based on a remaining capacity parameter correlated with a remaining capacity of the electricity storage device.

Further, the control unit comprises an air-fuel ratio control section, and an engine generating power limiting section.

The air-fuel ratio control section controls an air-fuel ratio of the engine which is an air-fuel ratio of a mixture supplied to the engine:

(1) such that the air-fuel ratio of the engine becomes a rich air-fuel ratio smaller than a stoichiometric air-fuel ratio when an engine parameter indicative of an operating state of the engine does not satisfy a predetermined condition; and

(2) such that the air-fuel ratio of the engine becomes the stoichiometric air-fuel ratio when the engine parameter satisfies the predetermined condition.

The engine parameter may include: a temperature of a cooling water of the engine; an increasing amount of a fuel injection amount which is determined based on the temperature of the cooling water of the engine, an elapsed time after an engine start, or the like; a target air-fuel ratio which is determined based on the temperature of the cooling water of the engine, or the like; a parameter indicative of an activating state of an air-fuel ratio sensor; and so on.

The engine generating power limiting section sets, when the air-fuel ratio of the engine is controlled to be the rich air-fuel ratio, an upper limit (maximum permissible value) of the engine generating power to/at a value smaller than a value which is set when the air-fuel ratio of the engine is controlled to be the stoichiometric air-fuel ratio. In other words, the engine generating power limiting section sets the "maximum permissible value of the engine generating torque in a case in which the air-fuel ratio of the engine is controlled to be the rich air-fuel ratio" to/at a "value which is smaller than the maximum permissible value of the engine generating torque in a case in which the air-fuel ratio of the engine is controlled to be the stoichiometric air-fuel ratio."

According to the thus configured hybrid vehicle, a "frequency of a state in which the engine does not generate a large power" becomes high in the case in which the air-fuel ratio of the engine is controlled to be the rich air-fuel ratio, as compared to the case in which the air-fuel ratio of the engine is controlled to be the stoichiometric air-fuel ratio. Thus, a time period in which the engine generates a large power while the energy efficiency of the engine is low can be shortened, resulting in an improvement of the fuel efficiency of the hybrid vehicle.

In this case, the engine generating power limiting section is configured so as to vary the upper limit based on a "user requesting power determined in accordance with the user requesting torque and a rotational speed of the drive axle" and the "remaining capacity parameter", when the air-fuel ratio of the engine is controlled to be the rich air-fuel ratio.

According to the above aspect, since the upper limit of the engine generating torque can be determined based on the user requesting power and the remaining capacity parameter, the user requesting torque can be satisfied by giving a priority to the electric motor generating torque as compared to the engine generating torque in such a manner that the remaining capacity of the electricity storage device does not become excessively small. Consequently, the fuel efficiency of the hybrid vehicle can be improved, since the engine is made not to generate a large power as much as possible in the state in which the energy efficiency of the engine is low.

More specifically, the engine generating power limiting section may be configured so as to vary the upper limit such that the upper limit becomes larger as the "user requesting power determined based on the user requesting torque and the rotational speed of the drive axle" becomes larger, when the air-fuel ratio of the engine is controlled to be the rich air-fuel ratio.

According to the configuration described above, the engine generating power can be made larger as the user requesting torque becomes larger, and thus, an occurrence of a state in which the user requesting torque cannot be satisfied can be avoided.

Further, the engine generating power limiting section may be configured so as to vary the upper limit such that the upper limit becomes smaller as the remaining capacity parameter becomes larger, when the air-fuel ratio of the engine is controlled to be the rich air-fuel ratio.

According to the configuration described above, the engine generating power can be made smaller as the remaining capacity parameter becomes larger, and thus, the engine generating power can be decreased when an electric power supplying ability of the electricity storage device is high. Consequently, the fuel efficiency of the hybrid vehicle can be improved without causing a state in which the electricity storage device is excessively discharged.

In another aspect of the present invention, the engine generating power limiting section is configured so as to set the upper limit to/at 0, when a "momentary power which is an electric power that the electricity storage device can generate/output per unit time" serving as the remaining capacity parameter is equal to or larger than the "user requesting power which is determined based on the user requesting torque and the rotational speed of the drive axle", in the state in which the air-fuel ratio of the engine is controlled to be the rich air-fuel ratio.

When the momentary power of the electricity storage device is equal to or larger than a value which can satisfy the user requesting power in the state in which the air-fuel ratio of the engine is controlled to be the rich air-fuel ratio, it is preferable that the electric power be supplied from the electricity storage device to the electric motor, and the engine do not generate the power. Accordingly, by the configuration described above, when the momentary power of the electricity storage device is a value which can satisfy the user requesting power, the power of the engine can be set to/at a minimum power ("0"), and therefore, the fuel efficiency of the hybrid vehicle can be further improved. It should be noted that setting the upper limit to/at 0 may include both a case in which the engine is operated in the self-sustaining operation and a case in which the operation of the engine is stopped.

Other objects, features, and associated advantages of the present invention will be readily understood from the following description of each of embodiments of the present invention with reference to the accompanying drawings.

BRIEF DESCRIPTION OF THE DRAWINGS

FIG. 1 is a schematic diagram of a hybrid vehicle according to a first embodiment of the present invention.
FIG. 2 is a flowchart showing a routine executed by a CPU of a power management ECU shown in FIG. 1.
FIG. 3 is a graph showing a relationship between an accelerator operation amount AP and a vehicle speed SPD, and a user requesting torque.
FIG. 4 is a graph showing a relationship between a remaining capacity of a battery shown in FIG. 1 and a battery charging requested power.
FIG. 5 is a graph showing a relationship between an engine generating torque and an engine rotational speed, and an optimum engine operation line.
FIG. 6 is a collinear diagram of a planetary gear device when the hybrid vehicle is running.
FIG. 7 is a graph showing a relationship between the remaining capacity of the battery and a user requesting power, and an upper limit of the engine output power.
FIG. 8 is a flowchart showing a routine executed by a CPU of an engine ECU shown in FIG. 1.
FIG. 9 is a flowchart showing a routine executed by the CPU of the engine ECU shown in FIG. 1.
FIG. 10 is a flowchart showing a routine executed by a CPU of a power management ECU of a hybrid vehicle according to a second embodiment of the present invention.

DESCRIPTION OF THE EMBODIMENT

A hybrid vehicle of each of embodiments according to the present invention will next be described with reference to the drawings.

<First embodiment>

(Construction)

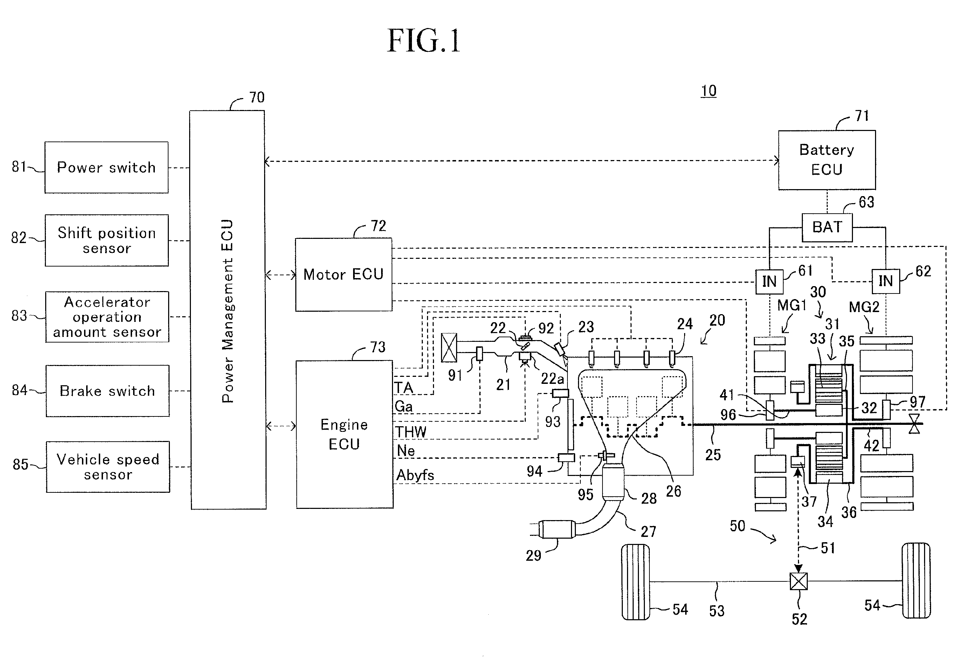

As shown in FIG. 1, the hybrid vehicle 10 of a first embodiment according to the present invention comprises a motor generator MG1, a motor generator MG2, an internal combustion engine 20, a power distribution mechanism 30, a power transmission mechanism 50, a first inverter 61, a second inverter 62, a battery 63, a power management ECU 70, a battery ECU 71, a motor ECU 72, and an engine ECU 73. It should be noted that an ECU stands for an Electric Control Unit, which is an electronic control circuit comprising a micro-computer as a main component that includes a CPU, a ROM, a RAM, an interface, and the like.

The motor generator MG1 is a synchronous generator-motor which can function as a generator and an electric motor. The motor generator MG1 is referred to as a first motor generator MG1, for convenience. The first motor generator MG1 mainly functions as the generator in the present example. The first motor generator MG1 comprises an output shaft (hereinafter, referred to as a "first shaft") 41.

The motor generator MG2 is a synchronous generator-motor which can function as a generator and an electric motor, similarly to the first motor generator MG1. The motor generator MG2 is referred to as a second motor generator MG2, for convenience. The second motor generator MG2 mainly functions as the electric motor in the present example. The second motor generator MG2 comprises an output shaft (hereinafter, referred to as a "second shaft") 42.

The engine 20 is a 4 cycle, spark-ignition, multi-cylinder internal combustion engine. The engine 20 comprises: an intake passage section 21 including an intake pipe and an intake manifold; a throttle valve 22; a throttle valve actuator 22a, a plurality of fuel injectors 23; a plurality of spark ignition devices 24 including spark plugs; a crank shaft which is an output shaft of the engine 20; an exhaust manifold 26; an exhaust pipe 27; an upstream three-way catalyst 28; and a downstream three-way catalyst 29. It should be noted that the engine 20 may comprise a variable intake valve timing control unit (VVT).

The throttle value 22 is rotatably supported in the intake passage section 21.

The throttle value actuator 22a rotates the throttle valve 22 in response to an instruction signal from the engine ECU 73 so as to vary a passage cross sectional area of the intake passage section 21.

Each of the fuel injectors 23 is disposed at an intake port of each of the cylinders so as to correspond to each of the cylinders, and is configured so as to inject a fuel of a fuel injection amount in response to an instruction signal from the engine ECU 73.

Each of the spark ignition devices 24 including spark plugs is configured so as to generate a spark for an ignition in each of the combustion chambers of the cylinders at an appropriate timing in response to an instruction signal from the engine ECU 73.

The upstream three-way catalyst 28 is a catalyst for purifying an exhaust gas, and is disposed at an exhaust gas aggregated portion of the exhaust manifold 26. That is, the catalyst 28 is provided in the exhaust passage of the engine 20. The catalyst 28 is configured so as to purify unburnt substances (HC, CO, etc.) and NOx, discharged from the engine 20.

The downstream three-way catalyst 29 is a catalyst for purifying the exhaust gas, and is disposed in the exhaust pipe 27 connected with the exhaust gas aggregated portion of the exhaust manifold 26. That is, the downstream three-way converter 29 is disposed in the exhaust passage and at a position downstream of the upstream three-way catalyst 28. The catalyst 29 is configured so as to purify unburnt substances (HC, CO, etc.) and NOx, discharged from the engine 20. It should be noted that the "catalyst" means the upstream three-way catalyst 28 unless specifically identified in the present specification and claims.

The engine 20 can vary the torque which the engine 20 generates and an engine rotational speed (and thus, an engine power) by varying the fuel injection amount, an intake air amount through changing an opening degree of the throttle valve 22 using the throttle valve actuator 22a, or the like. Further, the engine 20 can rises/increases a temperature of the exhaust gas discharged from the engine 20 by retarding the ignition timing with respect to a base ignition timing. Accordingly, the engine 20 can expedite warming up of the catalyst 28.

The power distribution mechanism 30 comprises a well-known planetary gear device 31. The planetary gear device 31 includes a sun gear 32, a plurality of planetary gears 33, and a ring gear 34.

The sun gear 32 is connected to the first shaft 41 of the first motor generator MG1. Therefore, the first motor generator MG1 can output a torque to the sun gear 32. Further, the first motor generator MG1 can be rotationally driven by a torque which is input to the first motor generator MG1 (first shaft 41) from the sun gear 32. The first motor generator MG1 can generate an electric power by being rotationally driven by the torque input into the first motor generator MG1 from the sun gear 32.

Each of a plurality of the planetary gears 33 meshes with the sun gear 32 and the ring gear 34. An axis of rotation of the planetary gear 33 is provided at the planetary carrier 35. The planetary carrier 35 is rotatably supported coaxially with the sun gear 32. Accordingly, the planetary gear 33 can revolve around the sun gear 32 while rotating.

The planetary carrier 35 is connected to the crank shaft 25 of the engine 20. Thus, the planetary gear 33 can be rotationally driven by a torque which is input to the planetary carrier 35 from the crank shaft 25.

The ring gear 34 is rotatably supported coaxially with the sun gear 32.

As described above, the planetary gear 33 meshes with the sun gear 32 and the ring gear 34. Therefore, when a torque is input from the planetary gear 33 to the sun gear 32, the sun gear 32 is rotationally driven by the torque. When a torque is input from the planetary gear 33 to the ring gear 34, the ring gear 34 is rotationally driven by the torque. To the contrary, when a torque is input from the sun gear 32 to planetary gear 33, the planetary gear 33 is rotationally driven by the torque. When a torque is input from the ring gear 34 to planetary gear 33, the planetary gear 33 is rotationally driven by the torque.

The ring gear 34 is connected to the second shaft 42 of the second motor generator MG2 through a ring gear carrier 36. Accordingly, the second motor generator MG2 can output a torque to the ring gear 34. In addition, the second motor generator MG2 can be rotationally driven by a torque which is input from the ring gear 34 to the second motor generator MG2 (second shaft 42). The second motor generator MG2 can generate an electric power by being rotationally driven by the torque which is input from the ring gear 34 to the second motor generator MG2.

Further, the ring gear 34 is connected to an output gear 37 through the ring gear carrier 36. Accordingly, the output gear 37 can be rotationally driven by a torque which is input from the ring gear 34 to the output gear 37. The ring gear 34 can be rotationally driven by a torque which is input from the output gear 37 to the ring gear 34.

The power transmission mechanism 50 includes a gear train 51, a differential gear 52, and a drive axle (drive shaft) 53.

The gear train 51 power-transmittably connects between the output gear 37 and the differential gear 52. The differential gear 52 is connected to the drive axle (shaft) 53. Drive wheels 54 are fixed to both ends of the drive axle 53. The torque from the output gear 37 is therefore transmitted to the drive wheels 54 through the gear train 51, the differential gear 52, and the drive axle 53. The hybrid vehicle 10 can run using that torque transmitted to the drive wheels 54.

The first inverter 61 is electrically connected with the first motor generator MG1 and the battery 63. Accordingly, when the first motor generator MG1 generates the electric power, the electric power generated by the first motor generator MG1 is supplied to the battery 63 through the first inverter 61. To the contrary, the first motor generator MG1 is rotationally driven by an electric power supplied from the battery 63 through the first inverter 61 to the first motor generator MG1.

The second inverter 62 is electrically connected with the second motor generator MG2 and the battery 63. Accordingly, the second motor generator MG2 is rotationally driven by an electric power supplied from the battery 63 through the second inverter 62 to the second motor generator MG2. To the contrary, when the second motor generator MG2 generates the electric power, the electric power generated by the second motor generator MG2 is supplied to the battery 63 through the second inverter 62.

It should be noted that the electric power generated by the first motor generator MG1 can be directly supplied to the second motor generator MG2, and the electric power generated by the second motor generator MG2 can be directly supplied to the first motor generator MG1.

The battery 63 is a lithium ion battery, in the present example. Note, however, that the battery 63 may be a chargeable and dischargeable electricity storage device, and be a nickel hydride battery, another secondary battery, and the like.

The power management ECU 70 (hereinafter, expressed as "PMECU 70") is information exchangeably connected with the battery ECU 71, the motor ECU 72, and the engine ECU 73, through communication.

The PMECU 70 is connected with a power switch 81, a shift position sensor 82, an accelerator operation amount sensor 83, a brake switch 84, a vehicle speed sensor 85, and the like, and is configured to receive output signals generated by those sensors.

The power switch 81 is a switch for booting/starting a system of the hybrid vehicle 10. The PMECU 70 is configured to boot the system (become a ready-on state) when the power switch 81 is operated while an unillustrated ignition key is inserted into an unillustrated key slot, and an unillustrated brake pedal is pressed.

The shift position sensor 82 is configured to generate an output signal indicating/indicative of a shift position selected using an unillustrated shift lever which is provided so as to be operated by the driver in the neighborhood of a driver's seat of the hybrid vehicle 10. The shift position includes P (parking position), R (reverse position), N(neutral position), and D(driving position).

The accelerator operation amount sensor 83 is configured to generate an output signal indicating/indicative of an operation amount (accelerator operation amount AP) of an unillustrated accelerator pedal provided so as to be operated by the driver.

The brake switch 84 generates an output signal indicating that the brake pedal is in an operation condition when the unillustrated brake pedal provided so as to be operated/pressed by the driver is operated.

The vehicle speed sensor 85 generates an output signal indicating/indicative of the vehicle speed SPD of the hybrid vehicle 10.

The PMECU 70 is configured to input a signal indicative of a remaining capacity SOC (State Of Charge) of the battery 63, which is calculated by the battery ECU 71. The remaining capacity SOC is a parameter correlated with a remaining capacity of the battery 63, and thus is also referred to as a remaining capacity parameter. The remaining capacity SOC is calculated based on an accumulated value of an electric current which is input into and/or output from the battery 63, or the like, according to a well-known method.

Further, the PMECU 70 is configured to receive a momentary power Wout (unit is W) of the battery 63, the momentary power Wout being calculated by the battery ECU 71. The momentary power Wout is also referred to as a battery momentary power Wout. The battery momentary power Wout is an upper limit of an electric power which the battery 63 can supply per unit time. The battery momentary power Wout are correlated with the remaining capacity SOC. The battery momentary power Wout becomes substantially constant when the remaining capacity SOC is equal to or larger than a predetermined value (e.g., 40 %), and becomes smaller as the remaining capacity SOC becomes smaller when the remaining capacity SOC is smaller than the predetermined value.

The PMECU 70 is configured to receive, through the motor ECU 72, a signal indicative of a rotational speed of the first motor generator MG1 (hereinafter, referred to as a "MG1 rotational speed Nm1 ") and a signal indicative of a rotational speed of the second motor generator MG2 (hereinafter, referred to as a "MG2 rotational speed Nm2").

It should be noted that the MG1 rotational speed Nm1 is calculated, by the motor ECU 72, based on an "output value of a resolver 96 which is disposed in the first motor generator MG1 and generates an output value corresponding to a rotational angle of a rotor of the first motor generator MG1." Similarly, the MG2 rotational speed Nm2 is calculated, by the motor ECU 72, based on an "output value of a resolver 97 which is disposed in the second motor generator MG2 and generates an output value corresponding to a rotational angle of a rotor of the second motor generator MG2."

The PMECU 70 is configured to receive, through the engine ECU 73, various output signals indicative of an engine operation state. The output signals indicative of the engine operation state include an engine rotational speed Ne, a throttle valve opening degree TA, a cooling water temperature THW of the engine, or the like.

The motor ECU 72 is connected with the first inverter 61 and the second inverter 62. The motor ECU 72 is configured to supply instruction signals to the first inverter 61 and the second inverter 62, based on instructions (an MG1 instruction torque Tm1* and an MG2 instruction torque Tm2*, described later) sent from the PMECU 70. Accordingly, the motor ECU 72 is configured to control the first motor generator MG1 using the first inverter 61, and to control second motor generator MG2 using the second inverter 62.

The engine ECU 73 is connected with "the throttle valve actuator 22a, the fuel injectors 23, and the ignition devices 24, and the like" serving as engine actuators, and is configured to send instruction signals to those actuators. Further, the engine ECU 73 is connected with "an air-flow meter 91, a throttle valve opening degree sensor 92, a cooling water temperature sensor 93, an engine rotational speed sensor 94, an air-fuel ratio sensor 95, and the like, so as to obtain output signals generated by those sensors.

The air flow meter 91 measures an amount of air introduced into the engine 20 per unit time, and outputs a signal indicative of that amount of air (intake air flow rate) Ga.

The throttle valve opening degree sensor 92 detects an opening degree of the throttle valve 22 (throttle valve opening degree), and outputs a signal indicative of that detected throttle valve opening degree TA.

The cooling water temperature sensor 93 detects a temperature of a cooling water of the engine 20 so as to output a signal indicative of the cooling water temperature THW. The cooling water temperature THW is a parameter which is strongly correlated with a temperature of the catalyst 28, and is referred to as a "catalyst temperature parameter."

The engine rotational speed sensor 94 generates a pulse signal every time the crank shaft 25 of the engine 20 rotates a predetermined angle. The engine ECU is configured so as to obtain the engine rotational speed Ne based on the pulse signal.

The air-fuel ratio sensor 95 is disposed in the exhaust gas aggregated portion of the exhaust manifold 26, and at a position upstream of the upstream three-way catalyst 28. The air-fuel ratio sensor 95 is a so-called "wide range air-fuel ratio sensor of a limiting current type." The air-fuel ratio sensor 95 detects an air-fuel ratio of an exhaust gas, and outputs the detected air-fuel ratio abyfs. It should be noted that the detected air-fuel ratio abyfs becomes larger as the air-fuel of the exhaust gas becomes larger (leaner).

The engine ECU 73 is configured to control the engine 20, by supplying instruction signals to "the throttle valve actuator 22a, the fuel injectors 23, and the ignition devices 24 (and further, an unillustrated variable intake valve timing control device)", based on the signals obtained from those sensors and instructions supplied from the PMECU 70. It should be noted that an unillustrated cam position sensor is provided to the engine 20. The engine ECU 73 obtains, based on the signals from the engine rotational speed sensor 94 and the cam position sensor, a crank angle (absolute crank angle) of the engine 20 with reference to an intake top dead center of a particular cylinder.

(Operation: Drive control)

An operation of the hybrid vehicle 10 will next be described. It should be noted that processes described below are executed by "the CPU of the PMECU 70 and the CPU of the engine ECU 73." However, hereinafter, for simplifying descriptions, the CPU of the engine ECU 73 is expressed as an "EG", and the CPU ot the PMECU 70 is expressed as a "PM." Further, as described later, except that an engine requested power Pe* is limited by an engine power upper limit Pemax, drive controls for the engine 20, the first motor generator MG1, and the second motor generator MG2 are described in, for example, Japanese Patent Application Laid-Open (*kokai*) No. 2009-126450 (US Patent Publication No. US2010/0241297), and Japanese Patent Application Laid-Open (*kokai*) No. Hei 9-308012 (US Patent No. 6,131,680, filed on March 10, 1997), and so on. Those are incorporated herein by reference.

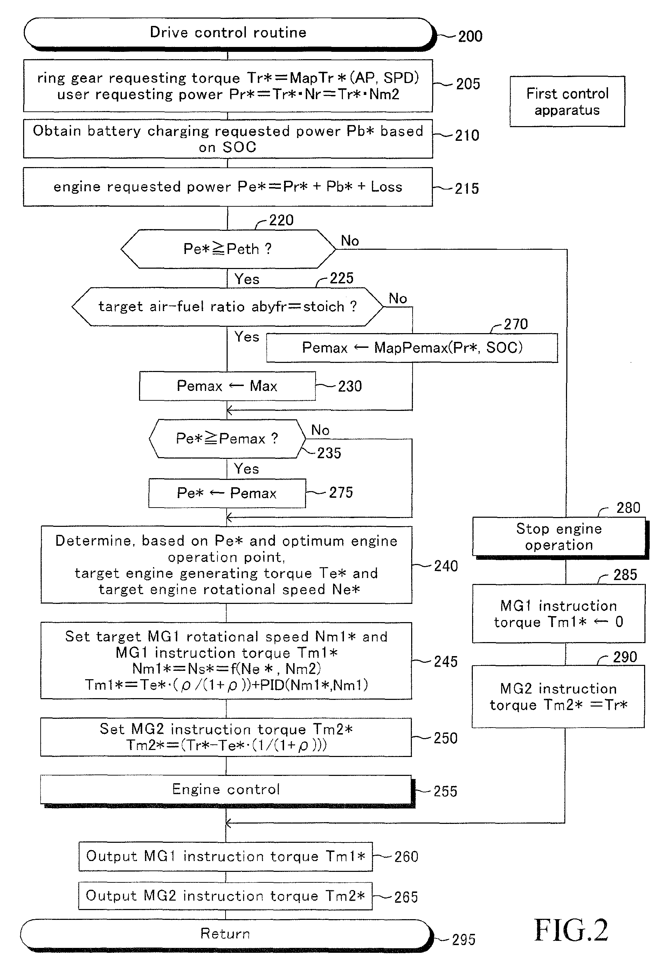

The PM is configured so as to execute a "drive control routine" shown by a flowchart in FIG. 2, every elapse of a predetermined time, when the shift position is the drive position. Accordingly, at an appropriate point in time, the PM starts processing from step 200 of FIG. 2 to execute processes from step 205 to step 215 sequentially, and proceeds to step 220.

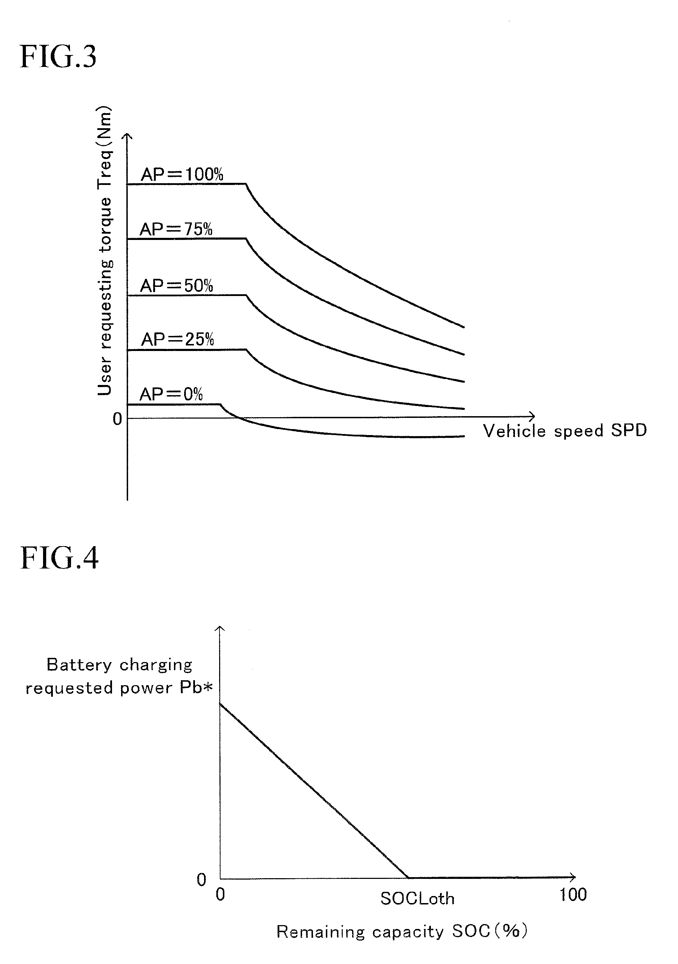

Step 205: The PM obtains a ring gear requesting torque Tr* based on the accelerator operation amount AP and the vehicle speed SPD. More specifically, there is a proportional relation between a torque applied to (acting on) the drive axle 53 (drive axle torque) and a torque applied to (acting on) the rotation shaft of the ring gear 34. Thus, a user requesting torque Tu* which the user is requesting/requiring to run the hybrid vehicle 10 is proportional to the ring gear requesting torque Tr*. In view of the above, the PM stores in the ROM a table as a torque map MapTr*(AP, SPD) which has data obtained by converting the "relationship between/among the accelerator operation amount AP, the vehicle speed SPD, and the user requesting torque Tu*" shown in FIG. 3 into a relationship between/among the accelerator operation amount AP, the vehicle speed SPD, and the ring gear requesting torque Tr*. The PM obtains the ring gear requesting torque Tr* by applying "the actual accelerator operation amount AP and the actual vehicle speed SPD" to the torque map MapTr*(AP, SPD).

Meanwhile, the power that the drive axle 53 is required to generate is equal to a product (Tu*·SPD) of the user requesting torque (vehicle requested driving force) Tu* and the actual vehicle speed SPD. This product (Tu*·SPD) is equal to a product (Tr*·Nr) of the ring gear requesting torque Tr* and the rotational speed Nr of the ring gear 34. Therefore, hereinafter, the product (Tr*·Nr) is referred to as a "user requesting power Pr*." In the present example, the ring gear 34 is connected to the second shaft 42 of the second motor generator MG2 without passing through a reducer. Accordingly, the rotational speed Nr of the ring gear 34 is equal to the MG2 rotational speed Nm2. Thus, the user requesting power Pr* is equal to a product (Tr*·Nm2) of the ring gear requesting torque Tr* and the MG2 rotational speed Nm2.

It should be noted that, if the ring gear 34 is connected to the second shaft 42 through a reducer, the rotational speed Nr of the ring gear 34 is equal to a value (Nm2/Gr) obtained by dividing the MG2 rotational speed Nm2 by a gear ratio Gr of the reducer. Thus, in this case, the user requesting power Pr* is calculated as a value (Tr*·Nm2/Gr).

Step 210: The PM obtains a battery charging requested power Pb* based on the remaining capacity SOC. The battery charging requested power Pb* is a value corresponding to an electric power to be supplied to the battery 63 to charge the battery 63.

More specifically, the PM stores in the ROM a table MapPb*(SOC) which defines a "relationship between the remaining capacity SOC and the battery charging requested power Pb*" shown in FIG. 4. The PM obtains the battery charging requested power Pb* by applying the actual remaining capacity SOC to the table MapPb*(SOC). According to the table MapPb*(SOC), the battery charging requested power Pb* is calculated to be "0" when the remaining capacity SOC is equal to or larger than a predetermined value SOCLoth. Further, according to the table MapPb*(SOC), the battery charging requested power Pb* is calculated so as to become larger as the remaining capacity SOC becomes smaller when the remaining capacity SOC is smaller than the predetermined value SOCLoth.

Step 215: The PM obtains, as the engine requested power Pe*, a value (Pr*+Pb*+Loss) obtained by adding a loss Loss to a sum of the user requesting power Pr* and the battery charging requested power Pb*. The engine requested power Pe* is a power that is required for the engine to generate.

Subsequently, the PM proceeds to step 220 to determine whether or not the engine requested power Pe* is equal to or larger than a requested power threshold Peth. The requested power threshold Peth is set at a value such that an operating efficiency (i.e., fuel efficiency) of the engine 20 becomes smaller than a permissible value when the engine 20 is operated while generating the power smaller than the requested power threshold Peth.

(Case 1)

It is assumed that the engine requested power Pe* is equal to or larger than the requested power threshold Peth. It is further assumed that a present point in time is after the engine 20 has been operated for a sufficiently long time period, and thus, the target air-fuel ratio abyfr is set to/at the stoichiometric air-fuel ratio. It should be noted that the target air-fuel ratio abyfr is a target of the air-fuel ratio of the mixture supplied to the engine 20, and is set by the EG, as described later.

In this case, the PM makes a "Yes" determination at step 220 to proceed to step 225, at which the PM determines whether or not the target air-fuel ratio abyfr is equal to the stoichiometric air-fuel ratio.

According to the assumption described above, the target air-fuel ratio abyfr is set to/at the stoichiometric air-fuel ratio. Therefore, the PM makes a "Yes" determination at step 225 to proceed to step 230, at which the PM sets the upper limit Pemax of the power that the engine 20 generates (hereinafter, referred to as an "engine power upper limit Pemax") to/at a maximum power Max that the engine 20 can generate (hereinafter, referred to as an "engine maximum power Max"). In other words, the engine 20 cannot generate a power larger than the engine maximum power Max under any of the operation states.

Subsequently, the PM proceeds to step 235 to determine whether or not the engine requested power Pe* is equal to or larger than the engine power upper limit Pemax. In this case, at step 230 described above, the engine power upper limit Pemax" is set to/at the engine maximum power Max. Thus, since the engine requested power Pe* is inevitably smaller than the engine power upper limit Pemax, the PM makes a "No" determination at step 235 to directly proceed to step 240, and sequentially executes processes from step 240 to step 265, described below. Thereafter, the PM proceeds to steps 295 to end the present routine tentatively.

Step 240: The PM operates the engine 20 in such a manner that the engine 20 generates a power equal to the engine requested power Pe* while the operation efficiency of the engine 20 becomes maximum/optimum. That is, the PM determines, based on the optimum engine operation point corresponding to the engine requested power Pe*, a target engine generating torque Te* and a target engine rotational speed Ne*.

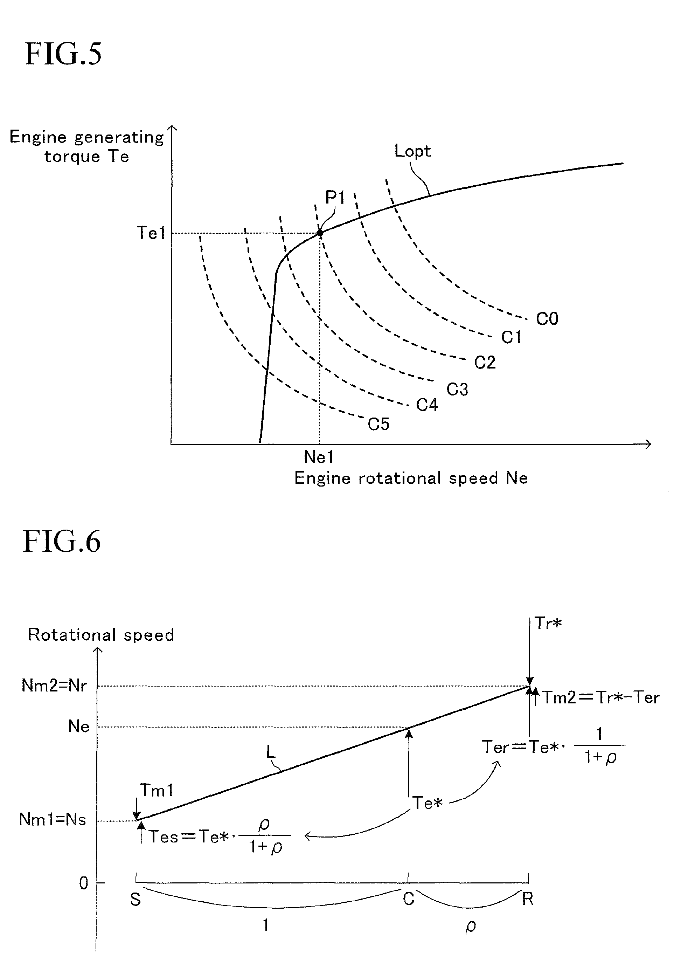

More specifically, an engine operation point at which the operating efficiency of the engine 20 (fuel consumption) becomes optimum when the engine 20 outputs a certain power from the crank shaft 25 is obtained, as an optimum engine operation point, in advance through experiments or the like for each of the power. Thus obtained optimum engine operation points are plotted on a graph defined by the engine generating torque Te and the engine rotational speed Ne. A line connecting between those plotted points is obtained as the optimum engine operation line. Thus obtained optimum engine operation line is shown by a solid line Lopt in FIG. 5. Each of a plurality of lines C0-C5 shown by a broken line in FIG. 5 is a line (equal power line) obtained by connecting engine operation points at which the engine 20 can generate the same power from the crank shaft 25.

The PM searches out the optimum engine operation point at which a power equal to the engine requested power Pe* is obtained, and determines "the engine generating torque Te and the engine rotational speed Ne" which correspond to the searched optimum engine operation point, as "the target engine generating torque Te* and the target engine rotational speed Ne*", respectively. For example, when the engine requested power Pe* is equal to a power corresponding to the line C2 in FIG. 5, the engine generating torque Te1 for an intersection point P1 of the line C2 with the solid line Lopt is determined as the target engine generating torque Te*, and the engine rotational speed Ne1 for the point P1 is determined as the target engine rotational speed Ne*.

Step 245: The PM calculates a "target MG1 rotational speed Nm1* which is equal to the target rotational speed Ns* of the sun gear 32", by applying the "MG2 rotational speed Nm2 which is equal to the rotational speed Nr" as the rotational speed Nr of the ring gear 34 and the target engine rotational speed Ne* as the engine rotational speed Ne to a formula (1) described below.

$$Ns = Nr - (Nr - Ne) \cdot (1 + \rho)/ \rho \qquad \cdots(1)$$

In the formula (1) described above, "p" is a value defined according to a formula (2) described below. That is, "p" is a ratio of the number of gear teeth of the sun gear 32 to the number of gear teeth of the ring gear 34.

$$\rho = \text{(the number of gear teeth of the sun gear 32)}/ \text{(the number of gear teeth of the ring gear 34)} \qquad \cdots(2)$$

Here, a ground for the above described formula (1) will be described. A relationship between rotational speeds of the gears of the planetary gear device 31 is represented by a well-known collinear diagram shown in FIG. 6. A straight line in the collinear diagram is referred to as an operation collinear line L. As understood from the collinear diagram, a ratio (=(Ne-Ns)/(Nr-Ns)) of a difference (Ne-Ns) between the engine rotational speed Ne and the rotational speed Ns of the sun gear 32 to a difference (Nr-Ns) between the rotational speed Nr of the ring gear 34 and the rotational speed Ns of the sun gear 32 is equal to a ratio (=1/(1+p)) of 1 to a value (1 +p). The formula (1) is obtained based on this proportional relationships.

In addition, at step 245, the PM calculates an MG1 instruction torque Tm1* which is a torque to be generated by the first motor generator MG1, according to a formula (3) described below. In the formula (3), the value PID (Nm1 * - Nm1) is a feedback amount which corresponds to a difference between "the MG1 target rotational speed Nm1* and the actual rotational speed Nm1 of the first motor generator MG1."

$$Tm1^* = Te^* \cdot (\rho/(1 + \rho)) + PID(Nm1^* - Nm1) \qquad \cdots(3)$$

Here, a ground for the above described formula (3) will be described. When a torque equal to the target engine generating torque Te* is generated at the crank shaft 25 (that is, when the engine generating torque is equal to Te*), the engine generating torque Te* is converted by the planetary gear device 31 into another torque. As a result, that converted torque is applied to (acts on) the rotation shaft of the sun gear 32 as a torque Tes represented by a formula (4) described below, and is applied to (acts on) the rotation shaft of the ring fear 34 as a torque Ter represented by a formula (5) described below.

$$Tes = Te^* \cdot (\rho / (1 + \rho)) \qquad \cdots(4)$$

$$Ter = Te^* \cdot (1 / (1 + \rho)) \qquad \cdots(5)$$

In order for the operation collinear line to be stable, an equilibrium of force on the operation collinear line must be achieved. Thus, as shown in FIG. 6, a torque Tm1, which has the same magnitude as the magnitude of the torque Tes obtained according to the formula (4) described above, and whose direction is opposite to the direction of the torque Tes, should be applied to the rotational shaft of the sun gear 32, and a torque Tm2 represented by a formula (6) described below should be applied to the rotational shaft of the ring gear 34. That is, the torque Tm2 is equal to a shortage of the torque Ter with respect to the ring gear requesting torque Tr*. This torque Tm2 is adopted as a MG2 instruction torque Tm2*.

$$Tm2 = Tr^* - Ter \qquad (6)$$

Meanwhile, when the sun gear 32 rotates at the target rotational speed Ns* (that is, when the actual rotational speed Nm1 of the first motor generator MG1 coincides with the target MG1 rotational speed Nm1*), the engine rotational speed Ne coincides with the target engine rotational speed Ne*. In view of the above, the MG1 instruction torque Tm1* is obtained according to the formula (3) described above.

Step 250: The PM calculates the MG2 instruction torque Tm2* which the PM should make the second motor generator MG2 generate, according to the above described formula (5) and the above described formula (6). It should be noted that the PM may determine the MG2 instruction torque Tm2* based on a formula (7) described below.

$$Tm2 = Tr^* - Tm1^*/\rho \qquad \cdots(7)$$

Step 255: The PM sends an instruction signal to the EG such that the engine 20 is operated at the optimum engine operation point (in other words, the engine generating torque coincides with the target engine generating torque Te*). Consequently, the EG varies the opening degree of the throttle valve 22 using the throttle valve actuator 22a, and varies the fuel injection amount accordingly, so as to control the engine 20 such that the engine generating torque Te becomes equal to the target engine generating torque Te*.

Step 260: The PM sends the MG1 instruction torque Tm1* to the motor ECU 72. The motor ECU 72 controls the first inverter 61 in such a manner that the torque generated by the first motor generator MG1 becomes equal to the MG1 instruction torque Tm1*.

Step 265: The PM sends the MG2 instruction torque Tm2* to the motor ECU 72. The motor ECU 72 controls the second inverter 62 in such a manner that the torque generated by the second motor generator MG2 becomes equal to the MG2 instruction torque Tm2*.

With the processes described above, a torque equal to the ring gear requesting torque Tr* is applied to the ring gear 34 using the engine 20 and the second motor generator MG2. Further, when the remaining capacity SOC is smaller than the predetermined value SOCLoth, the torque which the engine 20 generates is increased by an amount of the battery charging requested power Pb*. Accordingly, since the torque Ter becomes larger, the MG2 instruction torque Tm2* becomes smaller, as understood from the formula (6) described above. Consequently, since an electric power consumed by the second motor generator MG2 out of an electric power which the first motor generator MG1 generates becomes smaller, the battery 63 is charged using a surplus electric power generated by the first motor generator MG1 (electric power which is not consumed by the second motor generator MG2).

(Case 2)

Next, it is assumed that the engine requested power Pe* is equal to or larger than the requested power threshold Peth, however, the target air-fuel ratio abyfr is not set to/at the stoichiometric air-fuel ratio (that is, the target air-fuel ratio abyfr is set to/at the rich air-fuel ratio) because the engine 20 has not been operated for a sufficiently long time period.

In this case, the PM makes a "Yes" determination at step 220 to proceed to step 225, at which the PM makes a "No" determination to proceed to step 270. Then the PM obtains the engine power upper limit Pemax, based on the user requesting power Pr* and the remaining capacity SOC, at step 270.

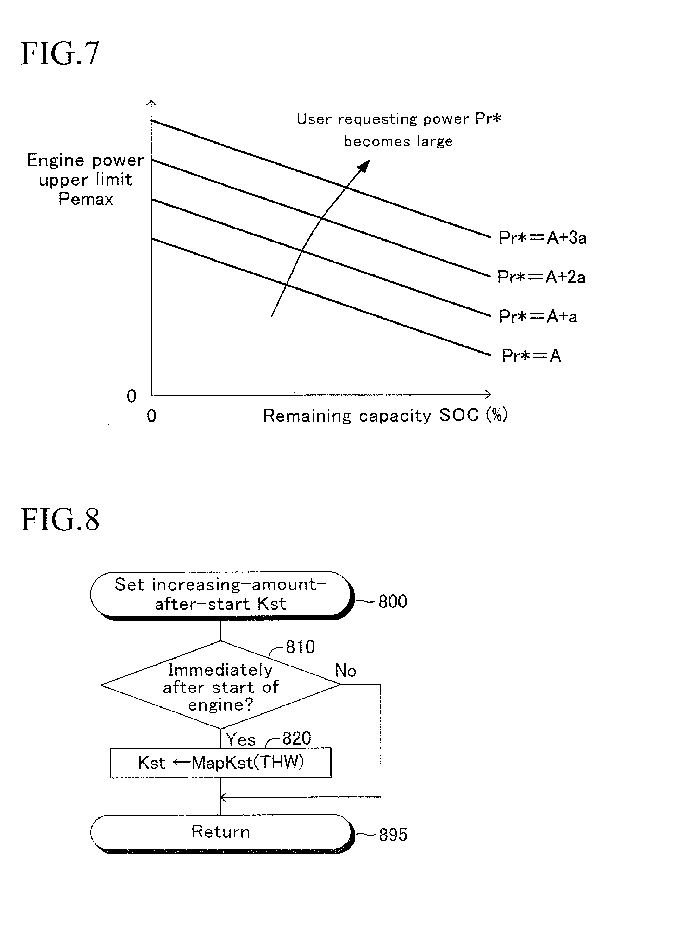

More specifically, the PM stores in the ROM the table MapPemax(Pr*, SOC) defining the "relationship between the remaining capacity SOC, the user requesting power Pr*, and the engine power upper limit Pemax" shown in FIG. 7. Further, the PM obtains the engine power upper limit Pemax by applying "the actual remaining capacity SOC and the actual user requesting power Pr*" to the table MapPemax(Pr*, SOC).

According to the table MapPemax(Pr*, SOC), the engine power upper limit Pemax is determined so as to become smaller as the remaining capacity SOC becomes larger, and so as to become larger as the user requesting power Pr* becomes larger. That is, the engine power upper limit Pemax is determined in such a manner that an electric power is supplied to the second motor generator MG2 such that the torque which the second motor generator MG2 generates compensates for as much as possible of the user requesting power Pr* (in actuality, the ring gear requesting torque Tr*), so as to decrease the power which the engine 20 generates as much as possible.

Subsequently, the PM proceeds to step 235 shown in FIG. 2 to determine whether or not the engine requested power Pe* is equal to or larger than the engine power upper limit Pemax. At this point, when the engine requested power Pe* is equal to or larger than the engine power upper limit Pemax, the PM makes a "Yes" determination at step 235 to proceed to step 275, at which the PM sets the engine requested power Pe* to/at the engine power upper limit Pemax. That is, the engine requested power Pe* is limited by the engine power upper limit Pemax. In contrast, when the engine requested power Pe* is smaller than the engine power upper limit Pemax, the PM makes a "No" determination at step 235 to directly proceed to steps after step 240.

Thereafter, the PM executes the processes from step 240 to step 265, as described above. Consequently, the power which the engine 20 generates is controlled in such a manner the power which the engine 20 generates becomes the engine power upper limit Pemax at a maximum. That is, in the case in which the target air-fuel ratio abyfr is not set to/at the stoichiometric air-fuel ratio, but is set to/at the rich air-fuel ratio, and when the engine requested power Pe* calculated at step 215 is equal to or larger than the engine power upper limit Pemax, the engine 20 is controlled so as to generate a torque which is equal to the engine power upper limit Pemax, in place of the engine requested power Pe* calculated at step 215. Accordingly, the engine is not operated in such a manner that the engine 20 generates a large power in a state in which the efficiency of the engine 20 is not good (state in which the engine 20 is operated with the rich air-fuel ratio). Thus, the energy efficiency of the engine 20 (that is, the fuel efficiency of the hybrid vehicle 10) can be improved.

Further, the target engine generating torque Te* (and thus, the engine generating torque Te) becomes small, and thus, the torque Ter becomes small, as understood from the formula (5) described above. Consequently, as understood from step 250 and the formula (6) described above, the MG2 instruction torque Tm2* becomes larger. That is, a larger amount of an electric power is supplied to the second motor generator MG2 from the battery 63. Accordingly, when the energy efficiency of the engine 20 is not good, the electric power from the battery 63 is supplied to the second motor generator MG2 as much as possible. This causes the remaining capacity SOC to decrease, however, such a decreased capacity is compensated by the power generated by the engine 20 when/after a state in which the engine 20 is efficiently operated is obtained (that is, after a point in time at which the air-fuel ratio of the engine is set to/at the stoichiometric air-fuel ratio). Accordingly, the engine 20 is operated in such a manner that the engine generates a high power in the state in which the engine efficiency is high, and thus, the fuel efficiency of the hybrid vehicle 10 can be improved.

(Case 3)

Next, it is assumed that the engine requested power Pe* is smaller than the requested power threshold Peth.
In this case, when the PM proceeds to step 220, the PM makes a "No" determination at step 220 to proceed to step 280, at which the PM sends an instruction to stop the operation of the engine 20 to the EG. As a result, the operation of the engine 20 is stopped.
Subsequently, the PM proceeds to step 285 to set the MG1 instruction torque Tm1* to/at "0", and proceeds to step 290 to set the MG2 instruction torque Tm2* to/at the ring gear requesting torque Tr*. Thereafter, the PM executes the processes of step 260 and step 265, described above. Consequently, the user requesting torque Tu* is satisfied with the torque which the second motor generator generates only.

(Operation: Control for the air-fuel ratio of the engine)

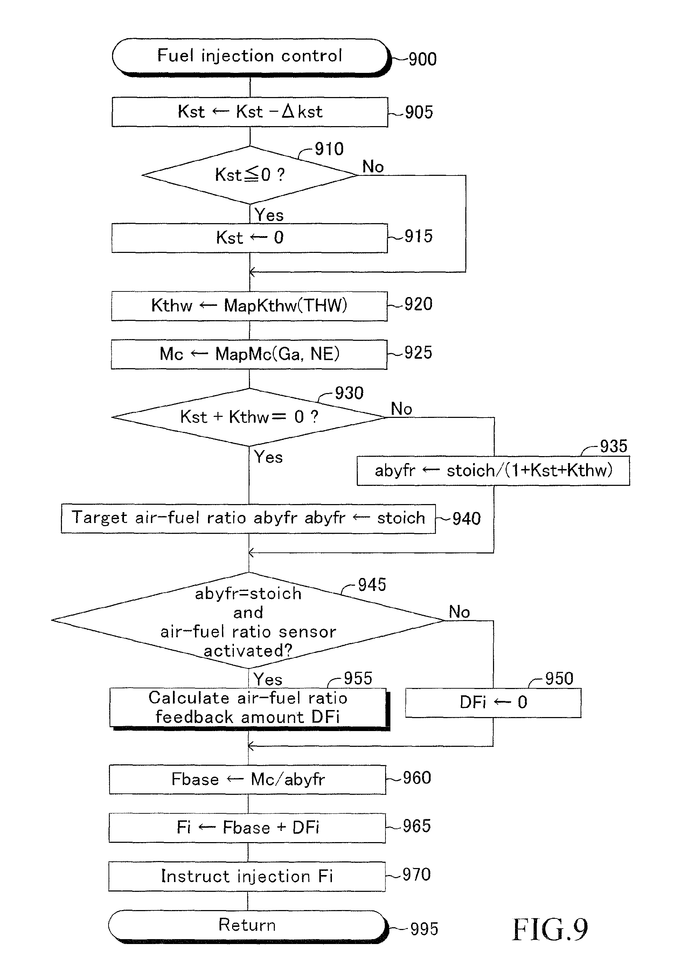

The control for the air-fuel ratio of the engine will next be described briefly. The EG is configured so as to execute an "increasing amount initial value after start setting routine" shown by a flowchart in FIG. 8, every elapse of a predetermined time.
Accordingly, at an appropriate point in time, the EG starts processing from step 800 of FIG. 8 to proceed to step 810, at which the CPU determines whether or not the current/present point in time is immediately after the engine 20 was started based on an instruction from the PM. If the present point in time is immediately after the engine 20 was started, the EG makes a "Yes" determination at step 810 to proceed to step 820, at which the EG determines an increasing-amount-after-start Kst (initial value of the increasing-amount-after-start Kst) based on the cooling water temperature THW. In this case, the increasing-amount-after-start Kst is calculated so as to become larger as the cooling water temperature THW is lower. Note, however, that the increasing-amount-after-start Kst is determined in such a manner that the increasing-amount-after-start Kst becomes "0" when the cooling water temperature THW is equal to or higher than a temperature THWth (e.g., 80°C) after a complete warming up of the engine. Thereafter, the EG proceeds to step 895 to end the present routine tentatively.
In contrast, when the present point in time is not immediately after the engine 20 was started, the EG makes a "No" determination at step 810 to directly proceed to step 890, at which the EG ends the present routine tentatively.
Further, the EG is configured so as to execute a "fuel injection control routine" shown by a flowchart in FIG. 9, every elapse of a predetermined time. Accordingly, at an appropriate point in time, the EG starts processing from step 900 of FIG. 9 to proceed to step 905, at which the EG sets an updated increasing-amount-after-start Kst to/at a value obtained by subtracting a positive predetermined value Δkst from the increasing-amount-after-start Kst. Consequently, the increasing-amount-after-start Kst gradually decreases.
Subsequently, the EG proceeds to step 910 to determine whether or not the increasing-amount-after-start Kst is equal to or smaller than "0." When the increasing-amount-after-start Kst is equal to or smaller than "0", the EG makes a "Yes" determination at step 910 to proceed to step 915, at which the EG sets the increasing-amount-after-start Kst to/at "0", and proceeds to step 920. In contrast, when the increasing-amount-after-start Kst is larger than "0", the EG makes a "No" determination at step 910 to directly proceed to step 920. With the processes described above, the increasing-amount-after-start Kst is set to a value equal to or larger than "0."
The EG determines, based on the "cooling water temperature THW at that point in time", a warming-up-increasing-amount Kthw at step 920. In this case, the warming-up-increasing-amount Kthw is calculated so as to become larger as the cooling water temperature THW is lower. Note, however, that the warming-up-increasing-amount Kthw is determined in such a manner that the warming-up-increasing-amount Kthw becomes "0" when the cooling water temperature THW is equal to or higher than the temperature THWth (e.g., 80°C) after the complete warming up of the engine.
Subsequently, the EG obtains an amount of air (i.e., in-cylinder intake air amount) Mc introduced into a cylinder per one intake stroke of the cylinder which will subsequently perform the intake stroke, based on the intake air amount Ga of the engine 20 and the engine rotational speed Ne. More specifically, the EG stores in the ROM a table MapMc(Ga, Ne) defining a relationship between "the intake air amount Ga and the engine rotational speed Ne" and "the in-cylinder intake air amount Mc." The EG obtains the in-cylinder intake air amount Mc by applying "the current/present intake air amount Ga and the current/present engine rotational speed Ne" to the table MapMc(Ga, Ne). It should be noted that the in-cylinder intake air amount Mc may be calculated using a well-known air-model.
Subsequently, the EG proceeds to step 930 so as to determine whether or not a sum (hereinafter, referred to as an "increasing amount") of the increasing-amount-after-start Kst and the warming-up-increasing-amount Kthw is equal to "0." When the increasing amount (Kst + Kthw) is not equal to "0", the EG makes a "No" determination at step 930 to proceed to step 935, at which the EG sets the target air-fuel ratio abyfr according to a formula (8) described below. In the formula (8), stoich is the stoichiometric air-fuel ratio (e.g., 14.6). Consequently, the target air-fuel ratio abyfr is set to/at the rich air-fuel ratio smaller than the stoichiometric air-fuel ratio.

$$\text{target air-fuel ratio abyfr} = \text{stoich}/(1 + Kst + Kthw) \quad \cdots(8)$$

In contrast, when the increasing amount (Kst + Kthw) is equal to "0", the EG makes a "Yes" determination at step 930 to proceed to step 940, at which the EG sets the target air-fuel ratio abyfr to/at the stoichiometric air-fuel ratio.

Subsequently, the EG proceeds to step 945 to determine whether or not "the target air-fuel ratio abyfr is set at the stoichiometric air-fuel ratio stoich and the air-fuel ratio sensor 95 has been activated." More specifically, the EG obtains a temperature of a solid electrolyte which is an element of the air-fuel ratio sensor 95, and determines that the air-fuel ratio sensor 95 is activated when the obtained temperature is equal to or higher than an activated temperature. It should be noted that an admittance of the solid electrolyte becomes larger as a "temperature of the solid electrolyte which is an element temperature of the air-fuel ratio sensor" becomes higher. An actual impedance of the solid electrolyte becomes smaller as the element temperature of the air-fuel ratio sensor becomes higher. In view of the above, the EG obtains the admittance or the impedance of the solid electrolyte every elapse of a predetermined time through an unillustrated routine according to a well-known method.

When the target air-fuel ratio abyfr is not the stoichiometric air-fuel ratio stoich, or when the air-fuel ratio sensor 95 has not been activated, the EG makes a "No" determination at step 945 to proceed to step 950, at which the EG sets an air-fuel ratio feedback amount DFi to/at "0", and proceeds to steps after step 960.

In contrast, when the target air-fuel ratio abyfr is set at the stoichiometric air-fuel ratio stoich and the air-fuel ratio sensor 95 has been activated, the EG makes a "Yes" determination at step 945 to proceed to step 955, at which the EG calculates the air-fuel ratio feedback amount DFi according to a well-known method (e.g., PI control). The air-fuel ratio feedback amount DFi is a feedback amount for having an "actual air-fuel ratio (detected air-fuel ratio) abyfs detected by the air-fuel ratio sensor 95" become equal to the "the stoichiometric air-fuel ratio stoich serving as the target air-fuel ratio abyfr." Briefly speaking, the air-fuel ratio feedback amount DFi is decreased when the detected air-fuel ratio abyfs is smaller than the stoichiometric air-fuel ratio stoich (i.e., rich air-fuel ratio), and is increased when the detected air-fuel ratio abyfs is larger than the stoichiometric air-fuel ratio stoich (i.e., lean air-fuel ratio).

Subsequently, the EG executes processes from step 960 to step 970 sequentially, and proceeds to step 995 to end the present routine tentatively.

Step 960: The EG calculates a base fuel injection amount Fbase by dividing the in-cylinder intake air amount Mc by the target air-fuel ratio abyfr. Therefore, if the target air-fuel ratio abyfr is the rich air-fuel ratio obtained at step 935, the base fuel injection amount Fbase becomes larger than a "base fuel injection amount Fbase when achieving the stoichiometric air-fuel ratio."

Step 965: The EG calculates a final fuel injection amount Fi by adding the air-fuel ratio feedback amount DFi to the base fuel injection amount Fb obtained at step 960.

Step 970: The EG sends an instruction signal to the fuel injector 23 provided for the cylinder (fuel injection cylinder) which will next perform the intake stroke in such a manner that a fuel of the final fuel injection amount Fi is injected to the fuel injection cylinder. With those processes, the fuel of the final fuel injection amount Fi is injected from the fuel injector 23 provided for the fuel injection cylinder at a point in time a predetermined crank angle before an intake top dead center of the fuel injection cylinder.

As described above, the hybrid vehicle 10 according to the first embodiment comprises: the internal combustion engine 20; the electric motor (the second motor generator MG2); the electricity storage device (the battery 63) capable of supplying the electric power for driving the electric motor to the electric motor; the generator (the first motor generator MG1) capable of generating an electric power to charge the electricity storage device using a driving force of the engine 20; the power transmission mechanism (the power distribution mechanism 30 and the power transmission mechanism 50) which torque-transmittably connects the drive axle 53 of the vehicle and the engine 20, and which torque-transmittably connects the drive axle 53 and the electric motor (second motor generator MG2); and a control unit (70, 73, and the like).

Further, the control unit applies, to the drive axel, a torque equal to the user requesting torque (the user requesting torque Tu*) which is a torque requested to be generated at the drive axle, the user requesting torque being determined based on the accelerator operation amount AP of the user, by controlling the engine generating torque and the electric motor output torque while adjusting the engine generating power in such a manner that the engine efficiency becomes the highest/optimum (that is, while operating the engine at the optimum engine operation point), and controls the electric power which the generator generates by varying the engine generating power based on the remaining capacity parameter (the remaining capacity SOC) correlated with the remaining capacity of the electricity storage device (step 205 to step 220, and step 240 to step 265, shown in FIG. 2).

Further, the control unit comprises:

the air-fuel ratio control section, which controls the air-fuel ratio of the engine which is the air-fuel ratio of the mixture supplied to the engine, in such a manner that the air-fuel ratio of the engine becomes the rich air-fuel ratio smaller than the stoichiometric air-fuel ratio when the engine parameter (the increasing amount) indicative of the operating state of the engine does not satisfy the predetermined condition (refer to FIG. 8, and step 905 to step 930, step 935, and step 960 to step 970, shown in FIG. 9); and in such a manner that the air-fuel ratio of the engine becomes the stoichiometric air-fuel ratio when the engine parameter satisfies the predetermined condition (refer to FIG. 8, and step 905 to step 930, step 940, and step 960 to step 970, shown in FIG. 9); and

the engine generating power limiting section, which sets, when the air-fuel ratio of the engine is controlled to be the rich air-fuel ratio, the upper limit (the engine power upper limit Pemax) of the engine generating power to/at the value smaller than a value set when the air-fuel ratio of the engine is controlled to be the stoichiometric air-fuel ratio (refer to step 225 to step 235, step 270, step 275, and step 240, shown in FIG.2).

Therefore, according to the hybrid vehicle 10, a frequency of a state in which the engine 20 does not generate a large power becomes high in the case in which the air-fuel ratio of the engine is controlled to be the rich air-fuel ratio, as compared to the case in which the air-fuel ratio of the engine is controlled to be the stoichiometric air-fuel ratio. Consequently, a time period in which the engine generates a large power while the energy efficiency of the engine 20 is low can be shortened, resulting in the improvement of the fuel efficiency of the hybrid vehicle 10.

In this case, the engine generating power limiting section is configured so as to vary the upper limit (the engine power upper limit Pemax) based on the "user requesting power Pr* which is determined based on the user requesting torque and the rotational speed of the drive axle" and the "remaining capacity parameter (the remaining capacity SOC)", when the air-fuel ratio of the engine is controlled to be the rich air-fuel ratio (refer to step 270 shown in FIG. 2, and FIG. 7). More specifically, the engine generating power limiting section is configured so as to vary the upper limit in such a manner that the upper limit becomes larger as the "user requesting power Pr* which is determined based on the user requesting torque and the rotational speed of the drive axle" becomes larger, when the air-fuel ratio of the engine is controlled to be the rich air-fuel ratio (refer to FIG. 7). Further, the engine generating power limiting section is configured so as to vary the upper limit in such a manner that the upper limit becomes smaller as the remaining capacity parameter becomes larger, when the air-fuel ratio of the engine is controlled to be the rich air-fuel ratio (refer to FIG. 7).

Accordingly, the user requesting torque Tu* (that is, the ring gear requesting torque Tr*) can be satisfied by giving a priority to the torque generated by the electric motor (the second motor generator MG2) as compared to the torque generated by the engine 20, while avoiding that the remaining capacity of the battery 63 becomes excessively small. Consequently, the fuel efficiency of the hybrid vehicle 10 can be improved, since the engine 20 is made not to generate a large power as much as possible in the state in which the energy efficiency of the engine 20 is low.

<Second embodiment>

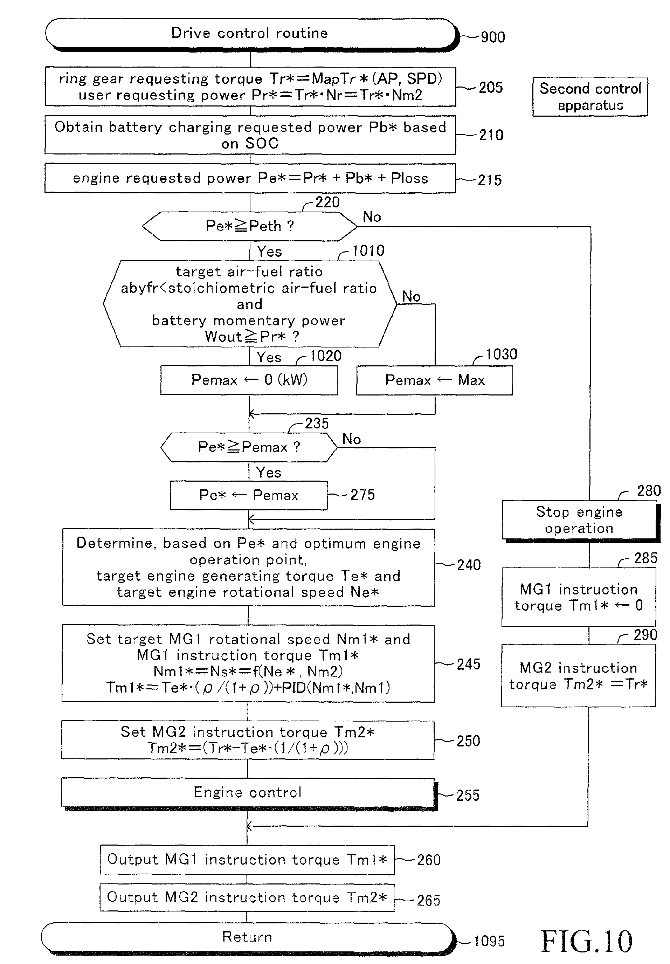

A hybrid vehicle 10 according to a second embodiment of the present invention will next be described. The hybrid vehicle 10 according to the second embodiment is different from the hybrid vehicle 10 according to the first embodiment only in that the PM executes a "drive control routine" shown by a flowchart in FIG. 10 in place of FIG. 2, every elapse of a predetermined time. Thus, this difference will mainly be described. It should be noted that each step in FIG. 10 at which the same process is performed as each step shown in FIG. 2 is given the same numeral as one given to such step shown in FIG. 2. Detail descriptions for those steps may be omitted appropriately.

The PM of the second embodiment proceeds to step 220 after calculating the ring gear requesting torque Tr*, the user requesting power Pr*, the battery charging requested power Pb*, and the engine requested power Pe*, at steps from step 205 to step 215. In this case, if the engine requested power Pe* is smaller than the requested power threshold Peth, the PM ends the present routine tentatively after it executes the processes of steps from step 280 to step 290, step 260, and step 265. This is the same as the first embodiment.

In contrast, if the engine requested power Pe* is equal to or larger than the requested power threshold Peth at a point in time at which the PM executes the process of step 220, the PM makes a "Yes" determination at step 220 to proceed to step 1010, at which the PM determines whether or not "the target air-fuel ratio abyfr is smaller than the stoichiometric air-fuel ratio (i.e., the target air-fuel ratio is the rich air-fuel ratio), and a battery momentary power Wout is equal to or larger than the user requesting power Pr*." The battery momentary power Wout is an electric power that the battery 63 can generate/output per unit time (dischargeable electric power momentary value). The battery momentary power Wout is calculated by the battery ECU 71 based on the remaining capacity SOC, a battery temperature detected by a battery temperature sensor which is not shown in FIG. 1, and the like, in such a manner that the battery momentary power Wout becomes smaller as the remaining capacity SOC becomes smaller, and/or as the battery temperature becomes lower.

It is now assumed that the target air-fuel ratio abyfr is smaller than the stoichiometric air-fuel ratio stoich, and the battery momentary power Wout is equal to or larger than the user requesting power Pr* since a condition of the battery 63 is good or the user requesting power Pr* is relatively small. In other words, it is assumed that the entire ring gear requesting torque Tr* can be covered by the second motor generator MG2 using the electric power which the battery 63 can supply. In this case, the PM makes a "Yes" determination at step 1010 to proceed to step 1020, at which the PM sets the engine power upper limit Pemax to/at "0 (kW)."

Subsequently, the PM proceeds to step 235. Presently, since the engine power upper limit Pemax is set at "0", the engine requested power Pe* is inevitably larger than the engine power upper limit Pemax. Accordingly, the PM proceeds from step 235 to step 275 so as to set the engine requested power Pe* to/at the engine power upper limit Pemax that is "0."

Subsequently, the PM executes processes from step 240 to step 265. In such a case in which the engine requested power Pe* is set to/at "0", the engine 20 is under the self-sustaining operation so that the engine 20 does not substantially output/generate a torque to the crank shaft 25 if the engine 20 is being operated. In this case, the engine rotational speed of the engine 20 at the optimum engine operation point becomes a value in the vicinity of the lowest rotational speed which allows the engine to maintain its operation, and thus, the target engine rotational speed Ne* is set to/at a value (e.g., idling rotational speed, such as 1,000 rpm) in the vicinity of the lowest rotational speed. In addition, since the engine requested power Pe* is "0", the target engine generating torque Te* is set to/at "0." Further, since the target engine generating torque Te* is "0", the MG2 instruction torque Tm2* is set to/at a value equal to the ring gear requesting torque Tr*.

In contrast, when the PM executes the process of step 1010, and if the target air-fuel ratio abyfr is set at the stoichiometric air-fuel ratio stoich, or the battery momentary power Wout is smaller than the user requesting power Pr*, the PM makes a "No" determination at step 1010 to proceed to step 1030, at which the PM sets the engine requested power Pe* to/at the engine maximum power Max. In this case, the engine requested power Pe* is inevitably smaller than the engine power upper limit Pemax which is set at the engine maximum power Max. Therefore, the PM directly proceeds to steps after step 240 from step 235. Thereafter, the PM executes the processes of steps from step 240 to step 265. Consequently, the output power of the engine 20 is not limited, and a normal operation is performed.

As described above, similarly to the first embodiment, the control unit of the hybrid vehicle 10 according to the second embodiment comprises the engine generating power limiting section, which sets, when the air-fuel ratio of the engine is controlled to be the rich air-fuel ratio, the upper limit (the engine power upper limit Pemax) of the generating power of the engine 20 to/at the value smaller than a value set when the air-fuel ratio of the engine is controlled to be the stoichiometric air-fuel ratio (refer to step 1010 to step 1030, step 235, and step 275, shown in FIG. 10).

Further, the engine generating power limiting section is configured so as to set the upper limit to/at "0 (kW)", when the "momentary power (battery momentary power Wout) which is the electric power that the electricity storage device can generate/output per unit time" serving as the remaining capacity parameter is equal to or larger than the "user requesting power Pr* which is determined based on the user requesting torque (the ring gear requesting torque Tr*) and the rotational speed of the drive axle (i.e., the vehicle speed)", in the state in which the air-fuel ratio of the engine is controlled to be the rich air-fuel ratio (refer to step 1010 and step 1020, shown in FIG. 10).

Accordingly, when the second motor generator MG2 can satisfy the user requesting torque (ring gear requesting torque Tr*), the engine 20 is not allowed to generate the output power. Therefore, the engine does not substantially generate the output power when the air-fuel ratio of the engine is controlled to be the rich air-fuel ratio, and thus, the engine efficiency is not good. Consequently, the fuel efficiency of the hybrid vehicle 10 can be improved.

The present invention is not limited to the embodiments described above, various modifications may be adopted within a scope of the present invention. For example, when the air-fuel ratio of the engine is set at the rich air-fuel ratio, the battery charging requested power Pb* may be set to/at "0" if the remaining capacity SOC is equal to or larger than a predetermined value (which is smaller than the value SOCLoth) so as to decrease the engine power upper limit Pemax.

In addition, in the second embodiment, the PM may proceed to step 260 and step 265 through steps from step 280 to step 290 after it executes the process of step 1020. Further, in FIG. 9, the target air-fuel ratio abyfr is set to/at the stoichiometric air-fuel ratio stoich, when the increasing amount (Kst + Kthw) is "0" (that is a value which does not provide the increasing). In contrast, the target air-fuel ratio abyfr may be set to/at the stoichiometric air-fuel ratio stoich, when the air-fuel ratio sensor 95 has become activated even if the increasing amount (Kst + Kthw) is larger than "0." Furthermore, the increasing amount is neither limited to the increasing-amount-after-start Kst nor the warming-up-increasing-amount Kthw. Moreover, the increasing-amount-after-start Kst may be decreased in accordance with an accumulated rotation number after the start of the engine 20.

It should be noted that the engine generating power limiting section of the hybrid vehicle 10 according to the above embodiments may be referred to as a section configured so as to limit the output power of the engine to a value equal to or smaller than the engine power upper limit Pemax.

**Claims**

**1.** A hybrid vehicle comprising:

an internal combustion engine;
an electric motor;
an electricity storage device capable of supplying an electric power for driving said electric motor to said electric motor;
a generator capable of generating an electric power for charging said electricity storage device using a driving force of said engine;
a power transmission mechanism configured to torque-transmittably connect a drive axle of said vehicle and said engine, and to torque-transmittably connect said drive axle and said electric motor; and
a control unit, which applies, to said drive axel, a torque equal to a user requesting torque which is a torque requested to be generated at said drive axle, said torque being determined based on an accelerator operation amount varied by a user, by controlling a torque generated by said engine and a torque generated by said electric motor while adjusting a power generated by said engine in such a manner that an engine efficiency becomes optimum, and which controls an electric power generated by said generator by varying said power generated by said engine based on a remaining capacity parameter correlated with a remaining capacity of the electricity storage device,
wherein,
said control unit comprises:

an air-fuel ratio control section which controls an air-fuel ratio of said engine which is an air-fuel ratio of a mixture supplied to said engine,
such that said air-fuel ratio of said engine becomes a rich air-fuel ratio smaller than a stoichiometric air-fuel ratio when an engine parameter indicative of an operating state of said engine does not satisfy a predetermined condition; and
such that said air-fuel ratio of said engine becomes the stoichiometric air-fuel ratio when said engine parameter satisfies said predetermined condition; and
an engine generating power limiting section which sets, when said air-fuel ratio of said engine is controlled to be said rich air-fuel ratio, an upper limit of said power generated by said engine to a value smaller than a value when said air-fuel ratio of said engine is controlled to be the stoichiometric air-fuel ratio.

2. The hybrid vehicle according to claim 1, wherein,
said engine generating power limiting section is configured so as to vary said upper limit based on a user requesting power determined in accordance with said user requesting torque and a rotational speed of said drive axle, and said remaining capacity parameter, when said air-fuel ratio of said engine is controlled to be said rich air-fuel ratio.

3. The hybrid vehicle according to claim 1, wherein,
said engine generating power limiting section is configured so as to vary said upper limit such that said upper limit becomes larger as said user requesting power determined based on said user requesting torque and a rotational speed of said drive axle becomes larger, when said air-fuel ratio of said engine is controlled to be said rich air-fuel ratio.

4. The hybrid vehicle according to claim 1, wherein,
said engine generating power limiting section is configured so as to vary said upper limit such that said upper limit becomes smaller as said remaining capacity parameter becomes larger, when said air-fuel ratio of said engine is controlled to be said rich air-fuel ratio.

5. The hybrid vehicle according to claim 1, wherein,
said engine generating power limiting section is configured so as to set said upper limit to 0, when a momentary power which is an electric power that said electricity storage device can generate per unit time, serving as said remaining capacity parameter, is equal to or larger than a user requesting power which is determined based on said user requesting torque and a rotational speed of said drive axle, in a state in which said air-fuel ratio of said engine is controlled to be said rich air-fuel ratio.

FIG.1

EP 2 786 909 A1

```
           ┌────────────────────────────────────────┐
           │         Drive control routine          │──200
           └────────────────────────────────────────┘
                              │
  ┌────────────────────────────────────────────────────┐          ┌──────────────┐
  │ ring gear requesting torque Tr*＝MapTr＊(AP, SPD)   │──205      │ First control│
  │ user requesting power Pr*＝Tr*・Nr＝Tr*・Nm2        │          │  apparatus   │
  └────────────────────────────────────────────────────┘          └──────────────┘
                              │
  ┌────────────────────────────────────────────────────┐
  │ Obtain battery charging requested power Pb* based   │──210
  │                    on SOC                           │
  └────────────────────────────────────────────────────┘
                              │
  ┌────────────────────────────────────────────────────┐
  │ engine requested power Pe*＝Pr* + Pb* + Loss        │──215
  └────────────────────────────────────────────────────┘
                              │
                          ┌─220
              ╱───────────────────────────╲     No
             ⟨       Pe*≧Peth ?            ⟩────────────────────────────────────┐
              ╲───────────────────────────╱                                     │
                         │ Yes       ┌─225                                       │
              ╱───────────────────────────╲   No                                │
             ⟨  target air-fuel ratio abyfr＝stoich ? ⟩──────┐                   │
              ╲───────────────────────────╱                 │                   │
                         │ Yes                               │  ┌─270            │
                         │          ┌──────────────────────────────────────┐    │
                         │          │  Pemax ← MapPemax(Pr*, SOC)          │    │
                         │          └──────────────────────────────────────┘    │
              ┌─────────────────────┐                        │                  │
              │  Pemax ← Max        │──230                   │                  │
              └─────────────────────┘                        │                  │
                         │◄───────────────────────────────────┘                 │
              ╱───────────────────────────╲   No                                │
             ⟨      Pe*≧Pemax ?           ⟩──────┐                              │
              ╲───────────────────────────╱      │                              │
                         │ Yes      └235          │                              │
              ┌─────────────────────┐             │                              │
              │  Pe* ← Pemax        │──275        │                              │
              └─────────────────────┘             │                   ┌─280     │
                         │◄───────────────────────┘                ┌──────────────┐
  ┌────────────────────────────────────────────────────┐          │ Stop engine  │
  │ Determine, based on Pe* and optimum engine         │          │  operation   │
  │              operation point,                       │──240     └──────────────┘
  │ target engine generating torque Te* and            │                 │ ┌─285
  │ target engine rotational speed Ne*                 │          ┌──────────────┐
  └────────────────────────────────────────────────────┘          │ MG1 instruction│
                         │                                         │ torque Tm1* ← 0│
  ┌────────────────────────────────────────────────────┐          └──────────────┘
  │ Set target MG1 rotational speed Nm1* and           │                 │ ┌─290
  │         MG1 instruction torque Tm1*                │──245     ┌──────────────┐
  │         Nm1*＝Ns*＝f(Ne＊, Nm2)                     │          │ MG2 instruction│
  │ Tm1*＝Te*・(ρ/(1+ρ))+PID(Nm1*,Nm1)                 │          │ torque Tm2*＝Tr*│
  └────────────────────────────────────────────────────┘          └──────────────┘
                         │                                               │
  ┌────────────────────────────────────────────────────┐                │
  │ Set MG2 instruction torque Tm2*                    │──250            │
  │ Tm2*＝(Tr*-Te*・(1/(1+ρ)))                         │                │
  └────────────────────────────────────────────────────┘                │
                         │                                               │
  ┌────────────────────────────────────────────────────┐                │
  │              Engine control                         │──255           │
  └────────────────────────────────────────────────────┘                │
                         │◄──────────────────────────────────────────────┘
  ┌─────────────────────────────────────────┐
  │ Output MG1 instruction torque Tm1*      │──260
  └─────────────────────────────────────────┘
                         │
  ┌─────────────────────────────────────────┐
  │ Output MG2 instruction torque Tm2*      │──265
  └─────────────────────────────────────────┘
                         │
           ┌────────────────────────────────────────┐
           │                Return                  │──295
           └────────────────────────────────────────┘
```

FIG.2

## FIG.3

## FIG.4

# FIG.5

Engine generating torque Te (vertical axis)

Lopt

P1

Te1

C0
C1
C2
C3
C4
C5

Ne1

Engine rotational speed Ne

# FIG.6

Rotational speed (vertical axis)

$Tr*$

$Nm2 = Nr$

$Tm2 = Tr* - Ter$

$Ne$

$Ter = Te* \cdot \dfrac{1}{1+\rho}$

$L$

$Te*$

$Nm1 = Ns$

$Tm1$

$Tes = Te* \cdot \dfrac{\rho}{1+\rho}$

0

S        C        R

1        $\rho$

## FIG.7

User requesting power Pr* becomes large

Engine power upper limit Pemax

Pr*＝A+3a

Pr*＝A+2a

Pr*＝A+a

Pr*＝A

0

0    Remaining capacity SOC (%)

## FIG.8

Set increasing-amount-after-start Kst — 800

Immediately after start of engine? ～810

No

Yes ～820

Kst ←MapKst(THW)

Return ～895

Fuel injection control ~900

$Kst \leftarrow Kst - \Delta kst$ ~905

$Kst \leqq 0$ ? —910 No

Yes

$Kst \leftarrow 0$ ~915

$Kthw \leftarrow MapKthw(THW)$ ~920

$Mc \leftarrow MapMc(Ga, NE)$ ~925

$Kst + Kthw = 0$ ? —930 No

Yes

$abyfr \leftarrow stoich/(1+Kst+Kthw)$ —935

Target air-fuel ratio abyfr abyfr $\leftarrow$ stoich ~940

abyfr=stoich
and
air-fuel ratio sensor
activated? —945 No

Yes —955

Calculate air-fuel ratio
feedback amount DFi

$DFi \leftarrow 0$ —950

$Fbase \leftarrow Mc/abyfr$ ~960

$Fi \leftarrow Fbase + DFi$ ~965

Instruct injection Fi ~970

Return ~995

FIG.9

Drive control routine — 900

ring gear requesting torque Tr*=MapTr*(AP, SPD)
user requesting power Pr*=Tr*·Nr=Tr*·Nm2 — 205

Second control apparatus

Obtain battery charging requested power Pb* based on SOC — 210

engine requested power Pe*=Pr* + Pb* + Ploss — 215

Pe*≧Peth ? — 220 — No

Yes — 1010

target air-fuel ratio
abyfr<stoichiometric air-fuel ratio
and
battery momentary power
Wout≧Pr* ? — No

Yes — 1020

Pemax ← 0 (kW)

Pemax ← Max — 1030

Pe*≧Pemax ? — 235 — No

Yes

Pe* ← Pemax — 275

Stop engine operation — 280

Determine, based on Pe* and optimum engine
operation point,
target engine generating torque Te* and
target engine rotational speed Ne* — 240

MG1 instruction torque Tm1* ← 0 — 285

Set target MG1 rotational speed Nm1* and
MG1 instruction torque Tm1*
Nm1*=Ns*=f(Ne*, Nm2)
Tm1*=Te*·(ρ/(1+ρ))+PID(Nm1*,Nm1) — 245

MG2 instruction torque Tm2* =Tr* — 290

Set MG2 instruction torque Tm2*
Tm2*=(Tr*-Te*·(1/(1+ρ))) — 250

Engine control — 255

Output MG1 instruction torque Tm1* — 260

Output MG2 instruction torque Tm2* — 265

Return — 1095

FIG.10

## INTERNATIONAL SEARCH REPORT

International application No.

PCT/JP2011/077947

### A. CLASSIFICATION OF SUBJECT MATTER
*B60W10/06*(2006.01)i, *B60K6/445*(2007.10)i, *B60W10/08*(2006.01)i, *B60W20/00*(2006.01)i

According to International Patent Classification (IPC) or to both national classification and IPC

### B. FIELDS SEARCHED

Minimum documentation searched (classification system followed by classification symbols)
B60W10/06, B60K6/445, B60W10/08, B60W20/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2002-195064 A (Toyota Motor Corp.), 10 July 2002 (10.07.2002), claim 1; paragraphs [0019], [0023], [0024] & US 2002/0078682 A1 & EP 1219488 A2 | 1-5 |
| Y | JP 2008-296619 A (Toyota Motor Corp.), 11 December 2008 (11.12.2008), paragraphs [0049], [0050], [0056] & WO 2008/146941 A1 | 1-5 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 January, 2012 (05.01.12) | 17 January, 2012 (17.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI9308012 B
- JP 2009126450 A
- US 20100241297 A
- US 6131680 A